# EUROPEAN PATENT APPLICATION

(11) **EP 4 745 203 A1**
(43) Date of publication of application: **20.05.2026**
(21) Application number: 25213965.4
(22) Date of filing: 06.11.2025
(51) Int. Cl.: C09D 11/102, B41J 2/21, C09D 11/107, C09D 11/322, C09D 11/40, C09D 11/54

(54) **INK SET AND RECORDING APPARATUS**

(30) Priority: 14.11.2024 JP 2024199091
(71) Applicant: KYOCERA Document Solutions Inc., Osaka-shi, Osaka 540-8585 (JP)
(72) Inventor: KIDA, Yukari, Osaka-shi, Osaka 540-8585 (JP)
(74) Representative: Viering, Jentschura & Partner mbB Patent- und Rechtsanwälte

(57) **Abstract**

An ink set includes: a first ink; a second ink; and a third ink. Each of the first ink, the second ink, and the third ink includes a binder, an organic solvent, water, and a surfactant, and the binder included in the first ink includes at least one of an acrylic resin or a polyolefin resin. The binder included in each of the second ink and the third ink includes a urethane resin, An absolute value of a difference between surface tension of the first ink and surface tension of the second ink is 2.0 mN/m or less. An absolute value of a difference between the surface tension of the first ink and surface tension of the third ink is 2.0 mN/m or less.

## Description

### Field

The present disclosure relates to an ink set applicable to printing on recording media and the like, and a recording apparatus.

### Background

Water-based inks ejected onto non-absorbent media do not exhibit permeation, making bleeding between colors a major challenge. In order to suppress the bleeding, measures such as imparting quick-drying properties to the ink and increasing the amount of drying heat are taken, but these can cause head nozzle clogging, leading to ejection failure and reduced productivity. Further, in the case of a white ink having a large particle size, adhesion and rubfastness become challenges. Further, resistance to lamination is desired for both surface printing and back printing.

For example, Japanese Patent Application Laid-open No. 2017-125158 discloses a pre-treatment liquid that includes a polyolefin copolymer having a structural unit derived from an unsaturated carboxylic acid, a structural unit derived from olefin, and a structural unit derived from acrylic acid ester, and an ink that includes a polyester polyurethane resin. Japanese Patent Application Laid-open No. 2017-95554 discloses an ink that includes an acrylic resin and urethane resin fine particles. Japanese Patent Application Laid-open No. 2016-169730 and Japanese Patent Application Laid-open No. 2020-152783 each disclose an ink that includes two types of resins.

### Summary

According to an embodiment of the present disclosure, there is provided an ink set, including: a first ink; a second ink; and a third ink.

Each of the first ink, the second ink, and the third ink includes a binder, an organic solvent, water, and a surfactant, and
the binder included in the first ink includes at least one of an acrylic resin or a polyolefin resin.

The binder included in each of the second ink and the third ink includes a urethane resin.

An absolute value of a difference between surface tension of the first ink and surface tension of the second ink is 2.0 mN/m or less.

An absolute value of a difference between the surface tension of the first ink and surface tension of the third ink is 2.0 mN/m or less.

A recording apparatus that uses the ink set according to an embodiment of the present disclosure includes: an ejection unit; a drying unit; and a control unit.

The ejection unit ejects the first ink, the second ink, and the third ink onto a recording medium.

The drying unit dries the first ink, the second ink, and the third ink applied to the recording medium.

The control unit performs control such that the ejection unit ejects the first ink, the second ink, and the third ink onto the recording medium in this order, and that the drying unit dries the recording medium onto which the first ink, the second ink, and the third ink has been ejected.

### Brief Description of Figures

Fig. 1 is a block diagram showing a configuration of a recording apparatus; and
Fig. 2 is a diagram relating to the evaluation of pinning properties.

### Detailed Description

Japanese Patent Application Laid-open No. 2017-125158 does not describe surface tension, and when the difference in surface tension between inks is too large, pinning properties cannot be ensured, causing bleeding. Further, in Japanese Patent Application Laid-open No. 2017-95554, Japanese Patent Application Laid-open No. 2016-169730, and Japanese Patent Application Laid-open No. 2020-152783, the ink includes two types of resins such as an acrylic resin and urethane resin fine particles, but has difficulties in achieving satisfactory performance and stability during preservation.

In view of the circumstances as described above, it is an object of the present disclosure to provide an ink set and a recording apparatus that are capable of forming high-quality images and have favorable adhesion and rubfastness and lamination suitability.

Embodiments according to the present disclosure will be described below with reference to the drawings.

### <Ink set>

An ink set according to an embodiment of the present disclosure includes a first ink, a second ink, and a third ink. Each of the first ink, the second ink, and the third ink includes a binder, an organic solvent, water, and a surfactant. In this embodiment, printing is performed by ejecting the first ink, the second ink, and the third ink onto a transparent recording medium in this order.

For example, the ink set is used for surface printing and back printing. The surface printing refers to printing on the front surface (surface on the side viewed by a viewer) of transparent recording media (non-absorbent media). In the case where the viewer views the recording medium on which surface printing has been performed, a positional relationship "viewer, image, and recording medium" is obtained, and the image is directly viewed by the viewer. Further, the back printing refers to printing on the back surface (surface on the side opposite to the side viewed by a viewer) of the transparent recording media. In the case where the viewer views the recording medium on which back printing has been performed, a positional relationship "viewer, recording medium, and image" is obtained, and the image is viewed by the viewer through the recording medium.

The binder is present in a dispersed state in water (aqueous medium) and functions as a binder that adheres the recording medium and the pigment to each other. The binder optimizes the fixability of the pigment such as a titanium oxide particle to the recording medium.

The organic solvent is used to improve the concealment and visibility of the recording medium by the white ink. For example, propylene glycol and triethylene glycol monobutyl ether are favorable as the organic solvent, but the solvent type and the composition are not limited to those shown in Examples.

The surfactant optimizes the compatibility and dispersion stability of each component included in the ink. The surfactant used in the first ink, the second ink, and the third ink favorably includes a silicon surfactant. Note that the surfactant is not limited to the silicon surfactant and may include anionic, cationic, amphoteric, and fluorine surfactants.

The first ink is a white ink. For example, a white pigment such as titanium oxide is used as the first ink. This allows the concealing rate of the formed image to increase by forming a base using the white ink on the transparent recording medium. Further, the first ink may be a clear ink. That is, the first ink does not necessarily need to include a white pigment. In this case, the first ink functions as an adhesive layer that adheres the recording medium and the second ink that is a white ink to each other, thereby ensuring adhesion to the recording medium and a concealing rate.

In this embodiment, the binder included in the first ink includes an acrylic resin or a polyolefin resin. For example, the binder included in the first ink is favorably provided as an acrylic emulsion or a polyolefin emulsion.

This allows the adhesion between the first ink and the recording medium to be improved by including an acrylic resin or a polyolefin resin, which has excellent adhesion to the recording medium (base material).

The content ratio of the binder included in the first ink is favorably 5 mass% or more and 20 mass% or less.

Note that the binder included in the first ink is not limited. For example, an appropriate binder may be included in accordance with the material and properties of the recording medium.

The solvent type and the composition are not limited to those shown in Examples, but the content ratio of the organic solvent included in the first ink is favorably 1.0 mass% or more and 20 mass% or less in the case of propylene glycol, and 2.0 to 10.0mass% in the case of triethylene glycol monobutyl ether.

The addition amount of the surfactant is not limited to that shown in Examples, but the content ratio of the surfactant included in the first ink is favorably 0.05 mass% or more and 0.5 mass% or less.

The content ratio of the water included in the first ink is favorably 55 mass% or more and 75 mass% or less.

The second ink is a white ink. For example, the second ink includes a white pigment such as titanium oxide, and a binder that adheres the recording medium and the pigment to each other.

In this embodiment, the binder included in the second ink includes a urethane resin having excellent rubfastness and lamination suitability. For example, the binder included in the second ink is favorably provided as a urethane emulsion. This allows an ink having favorable adhesion, rubfastness, and lamination suitability to be obtained.

The content ratio of the binder included in the second ink is favorably 10 to 15 mass%.

Note that the binder included in the second ink is not limited. For example, an appropriate binder may be used in accordance with the components included in the first ink.

The solvent type and the composition are not limited to those shown in Examples, but the content ratio of the organic solvent included in the second ink is favorably 1.0 mass% or more and 20 mass% or less in the case of propylene glycol, and 2.0 to 10.0 mass% in the case of triethylene glycol monobutyl ether.

The content ratio of the surfactant included in the second ink is favorably 0.05 mass% or more and 0.5 mass% or less.

The content ratio of the water included in the second ink is favorably 55 mass% or more and 75 mass% or less.

The third ink is a color ink. For example, a pigment of Cyan, Yellow, or Magenta is used for the third ink.

In this embodiment, the binder included in the third ink includes a urethane resin having excellent rubfastness and lamination suitability. For example, the binder included in the third ink is favorably provided as a urethane emulsion. This allows an ink having favorable adhesion, rubfastness, and lamination suitability to be obtained.

The content ratio of the binder included in the third ink is favorably 7.0 to 10.0 mass%.

Note that the binder included in the third ink is not limited. For example, an appropriate binder may be used in accordance with the components included in the first ink or the components included in the second ink.

The solvent type and the composition are not limited to those shown in Examples, but the content ratio of the organic solvent included in the third ink is favorably 1.0 mass% to 25 mass% in the case of propylene glycol, and 0.2 to 10.0 mass% in the case of triethylene glycol monobutyl ether.

The content ratio of the surfactant included in the third ink is favorably 0.05 mass% or more and 0.5 mass% or less.

The content ratio of the water included in the third ink is favorably 50 mass% or more and 80 mass% or less.

In this embodiment, the absolute value of the difference between the surface tension of the first ink and the surface tension of the second ink is 2.0 mN/m or less. Further, the absolute value of the difference between the surface tension of the first ink and the surface tension of the third ink is 2.0 mN/m or less. Further, in this embodiment, the ratio (p/B) of a pigment (p) to a binder (B) included in the first ink is favorably 1.1 or less.

This suppresses the bleeding of the ink and exhibits an excellent effect of pinning properties by reducing the difference between the surface tension of the first ink and the surface tension of the second ink and the difference between the surface tension of the first ink and the surface tension of the third ink. Further, by setting the ratio of the pigment to the binder to 1.1 or less, a more favorable adhesion effect can be achieved when the second ink and the third ink are ejected onto the first ink ejected first.

The above ink set is characterized in that the binder included in the first ink includes an acrylic resin or a polyolefin resin, the binder included in each of the second ink and the third ink includes a urethane resin, the absolute value of the difference between the surface tension of the first ink and the surface tension of the second ink is 2.0 mN/m or less, and the absolute value of the difference between the surface tension of the first ink and the surface tension of the third ink is 2.0 mN/m or less, and provides an ink that is capable of forming high-quality images on non-absorbent media and have favorable adhesion, rubfastness, pinning properties, and lamination suitability.

Further, the difference in surface tension between the second ink and the third ink is not specified, but the second ink is a white ink using a pigment with high specific gravity, and thus, a density difference occurs between the second ink and the third ink. In this embodiment, density (ρ2) of the second ink is higher than density (ρ3) of the third ink, and the relationship of ρ2 - ρ3 > 0.05 is favorably established. This prevents the dot diameter of the ink droplets deposited later from spreading more than the dot diameter of the ink droplets deposited earlier, thereby achieving a pinning effect.

Note that in addition to the above, the ink set may further include known additives such as a dissolution stabilizer, an anti-drying agent, an antioxidant, a viscosity adjustor, a pH adjuster, and an antifungal agent, as necessary.

Further, the colors of the first ink, the second ink, and the third ink are not limited, and various colors (pigments) other than the white ink may be used. Further, the white ink may include not only a pure white color but also white-based colors such as ivory, pale eggshell, oyster white, snow white, moon white, and greyish white. Further, the recording medium onto which the ink set is to be ejected is not limited to a transparent recording medium used for surface printing and back printing and may be an opaque recording medium.

### <Recording apparatus>

A recording apparatus 10 that ejects the ink set and dries the ejected ink according to an embodiment of the present disclosure will be described.

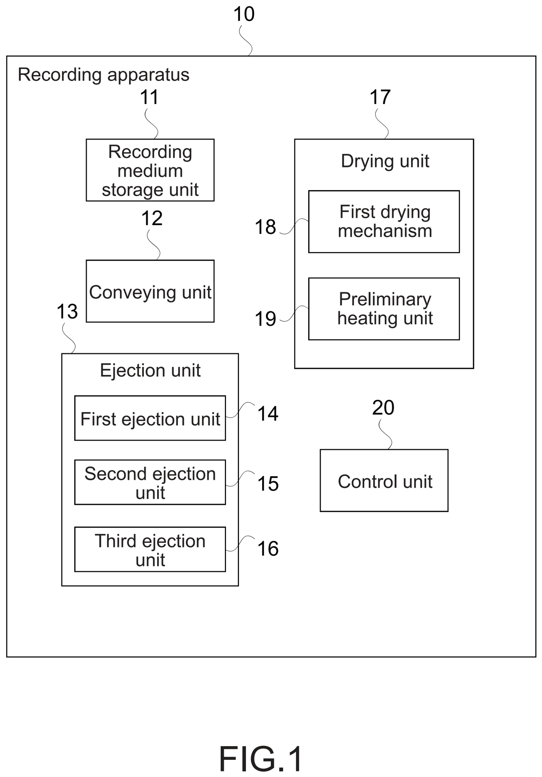

Fig. 1 is a block diagram showing a configuration of the recording apparatus 10.

As shown in Fig. 1, the recording apparatus 10 includes a recording medium storage unit 11, a conveying unit 12, an ejection unit 13, a drying unit 17, and a control unit 20.

The recording medium storage unit 11 stores recording media onto which the ink is to be ejected. For example, transparent recording media used for surface printing are stored and supplied to the conveying unit 12 one by one when performing printing.

The conveying unit 12 conveys the recording medium to the ejection unit 13 and the drying unit 17. For example, the conveying unit 12 is provided with a conveyor belt, a conveying roller, and a resist roller for conveying the recording medium from the recording medium storage unit 11 to the ejection unit 13 and from the ejection unit 13 to the drying unit 17, a support plate that supports the recording medium, a ventilation hole for adsorbing the recording medium on the conveyor belt.

The ejection unit 13 ejects the first ink, the second ink, and the third ink onto the recording medium. For example, the ejection unit 13 includes a head unit on which the first ink, the second ink, and the third ink are mounted, a plurality of nozzles for ejecting each ink (e.g., a first ejection unit 14 that ejects the first ink, a second ejection unit 15 that ejects the second ink, and a third ejection unit 16 that ejects the third ink), a drive circuit that controls the amount of the ink to be ejected, and a pressure element that pressurizes the nozzle. In this embodiment, the ejection unit 13 ejects the first ink, the second ink, and the third ink onto the recording medium in this order.

Further, in this embodiment, the ejection unit 13 uses a line head that fixes a liquid jet head having a width equal to or larger than the recording width of the recording medium to the inkjet apparatus.

The drying unit 17 dries the ink ejected onto the recording medium. In this embodiment, the drying unit 17 includes a first drying mechanism 18 for drying the first ink when the first ink is ejected. For example, the first drying mechanism 18 is provided between the first ejection unit 14 that ejects the first ink and the second ejection unit 15 that ejects the second ink. That is, the first drying mechanism 18 dries the first ink before the second ink is ejected onto the recording medium.

Further, the drying unit 17 further includes a preliminary heating unit 19 that heats the conveying unit 12 that conveys the recording medium. For example, the preliminary heating unit 19 performs preheating to heat the conveyor belt for conveying the recording medium in advance. In this embodiment, the conveying unit 12 is heated at the timing at which each ink is ejected to perform drying quickly after ejecting the inks of all colors (the first ink, the second ink, the third ink, etc.).

Note that the method of drying the ink by the drying unit 17 is not limited, and an infrared heater, a fan that blows warm air, or the like may be used. Further, the recording apparatus 10 is not limited to the above configuration, and does not necessarily need to include the first drying mechanism 18 and the preliminary heating unit 19 as long as the first ink, the second ink, and the third ink can be sufficiently dried and an ink set capable of exhibiting favorable adhesion, rubfastness, and lamination suitability can be formed on the recording medium.

The control unit 20 controls the recording apparatus 10. In this embodiment, the control unit 20 performs control such that the ejection unit 13 ejects the first ink, the second ink, and the third ink onto the recording medium in this order and that the drying unit 17 dries the recording medium after the first ink, the second ink, and the third ink are ejected onto the recording medium. For example, the control unit 20 includes a calculation unit and a storage unit (not shown). The calculation unit is, for example, a central processing unit (CPU). The storage unit includes a storage medium such as a read only memory (ROM), a random access memory (RAM), and an electrically erasable programmable read only memory (EEPROM). The calculation unit reads the control program stored in the storage unit and executes the program, thereby executing various types of processing.

For example, the control unit 20 may form an image by supplying an ejection signal according to the pixel to the pressure element of the ejection unit 13 on the basis of the input image data and controlling the drying treatment of the drying unit 17 at appropriate timing. Further, the control unit 20 may perform control of each configuration mounted on the recording apparatus 10, such as an operation unit to which a user's operation is input and a display unit that includes a display showing an operation menu and status, in addition to the control of the ejection unit 13 and the drying unit 17.

This improves pinning properties due to either a reduction in the amount of liquid on the base material or an increase in viscosity of the ink on the base material, by drying the first ink by the first drying mechanism 18 before the second ink is ejected. Note that whether a reduction in the amount of liquid on the base material or an increase in viscosity of the ink on the base material contributes to the improvement in pinning properties depends on the degree of drying of the ink.

Further, preheating to heat the conveyor belt for conveying the recording medium in advance, which is performed by the preliminary heating unit 19, allows initial pinning properties to be enhanced. Further, by performing drying quickly after ejecting the inks of all colors, it is possible to achieve image quality with the maintained pinning effect.

### <Example>

Examples of the present disclosure will be described below.

### <Method of producing ink>

In the present disclosure, the first ink, the second ink, and the third ink are produced as an ink set. A dispersion A is used for the first ink and the second ink, and a dispersion B is used for the third ink.

### <Preparation of dispersion A>

The dispersion A included in the first ink and the second ink is prepared by mixing 50 g of a pigment, 14.5 g of a pigment dispersant, and 41.3 g of water using a ball mill and dispersing zirconia beads (diameter: 1.0 mm) at a filling rate of 70% and 8 m/s for 60 minutes using a bead mill (device name: Research Lab, manufactured by Shinmaru Enterprises Corporation).

Further, the following pigment is used as the pigment.
White pigment: "CR-50" manufactured by ISHIHARA SANGYO KAISHA, LTD.
Further, the following pigment dispersant is used as the pigment dispersant.
"SOLSPERSE (registered trademark) W100" manufactured by The Lubrizol Corporation

### <Preparation of dispersion B>

The dispersion B included in the third ink is prepared in the same manner as that for the dispersion A. The difference from the dispersion A includes the pigment and the pigment dispersant, and the following pigment and pigment dispersant are used.
Cyan pigment: "PV FAST BLUE BG" (Pigment Blue 15:3) manufactured by Heubach
"DISPERBYK-2010" manufactured by BYK Japan KK

### <Evaluation method>

For the ink sets according to Examples 1 to 7 and Comparative Examples 1 to 3, pinning properties, adhesion, rubfastness, and lamination suitability were evaluated by the following method.

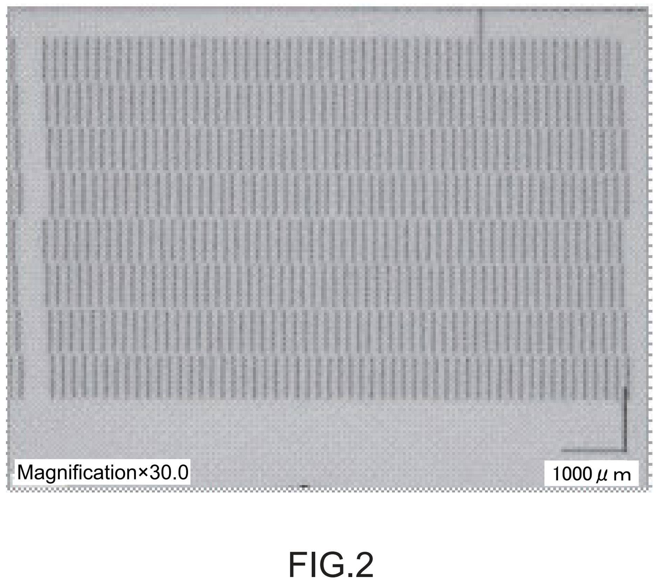

Fig. 2 is a diagram relating to the evaluation of pinning properties.

For the evaluation of pinning properties, a simple jig is created using KJ4B-1200 (manufactured by KYOCERA Corporation), the first ink, the second ink, and the third ink are ejected as shown in Fig. 2, and the width of the formed line is measured. Further, as the base material onto which the ink is ejected, "corona-treated PET" manufactured by FUTAMURA CHEMICAL CO.,LTD. is used. Further, the temperature of preheating (process of heating the conveying plate for conveying the base material before the ejected ink is dried) performed on the base material is set to 50°C, the ink is ejected onto the base material, and then, drying is performed at 110°C for 5 minutes after 2 seconds. Further, Fig. 2 collectively shows the line width results for the printing of the first ink and the second ink, and the printing of the first ink and the third ink, because their determination results are the same.

As the criteria for evaluating pinning properties, the line width of 45 µm or more and 55 µm or less is determined to be A (Particularly good), the line width of 56 µm or more to 65 µm or less is determined to be B (Good), and the line width of 66 µm or more is determined to be C (Poor). Further, as the comprehensive evaluation criteria for pinning properties of each ink, when the pinning properties of the first ink and the second ink are determined to be B or higher (first condition) and the pinning properties of the first ink and the third ink are determined to be B or higher (second condition), the pinning is evaluated to be acceptable (OK). Further, when the pinning properties of the first ink and the second ink is determined to be B or higher and the pinning properties of the first ink, the second ink, and the third ink are determined to be B or higher (third condition), the pinning is evaluated to be acceptable (OK). Further, when the pinning properties in any of the first condition, the second condition, or the third condition are determined to be less than B (C), the pinning is evaluated to be unacceptable (NG).

For the evaluation of adhesion, "corona-treated PET" manufactured by FUTAMURA CHEMICAL CO.,LTD. and "corona-treated OPP film" manufactured by FUTAMURA CHEMICAL CO.,LTD. are used as the base materials. The first ink and the second ink were output as a solid image onto the base material, the third ink was output as a solid image onto the solid image, and they were dried at 110°C for 20 minutes and then left to stand for one day.

Further, 25 squares described in JIS K5600 Testing methods for paints were created for the regions where the solid image was formed, "Cellulose Tape (registered trademark)" (width of 18 mm, CT-18S) manufactured by NICHIBAN Co., Ltd. was applied thereto by a cross-cut method, the surface state of the image after peeling was observed, and adhesion was evaluated in accordance with the following evaluation criteria.

As the criteria for evaluation adhesion, no peeling due to tape is determined to be A (Particularly good), peeling of 1 to 3 squares of grid-like notches, which is acceptable for practical use, is determined to be B (Good), and 4 or more squares of grid-like notches, which is unacceptable for practical use, is determined to be C (Poor).

For the evaluation of rubfastness, the first ink and the second ink were output as a solid image onto the base material, the third ink was output as a 100% solid image onto the solid image, and they were dried at 110°C for 20 minutes and then left to stand for one day (hereinafter, this base material will be referred to as a recorded material). In the evaluation method, A4-size copy paper ("copy paper CC90" manufactured by Mondi) was used as a recording medium and a dry friction test was performed on the solid image. The rubfastness was evaluated by measuring the change amount of image ID and the FD value on CC90.

As the criteria for evaluating rubfastness, no exposure of the base material after 1000 rubs is determined to be A (Particularly good), no exposure of the base material after 100 rubs is determined to be B (Good), and exposure of the base material is determined to be C (Poor).

For the evaluation of lamination suitability, a laminating adhesive obtained by mixing "TAKELAC (registered trademark) A-525S" manufactured by Mitsui Chemicals, Inc. as a main agent and "TAKENATE (registered trademark) A-50" manufactured by Mitsui Chemicals, Inc. as a curing agent at a mass ratio of 9:1 is applied to a wire bar to form a dry film having a thickness of 3 µm. Further, the laminating adhesive was applied to the above recorded material used for the evaluation of rubfastness, and the dilution solvent was evaporated and dried using a dryer. The adhesive surface of the recorded material to which the adhesive composition was applied was laminated with the PET film. After lamination, the laminated film was preserved at 40°C for 3 days, and a peel test was carried out. In the peel test, evaluation was performed by holding one base material of the non-adhesive portion at the end of the laminated film with a jig and holding and pulling the other by hand.

As the criteria for evaluating lamination suitability, no peeling is determined to be B (Good), and partial peeling or easy peeling is determined to be C (Poor).

### <Preparation of ink>

As shown in the following Tables 1 to 16, the first ink, the second ink, and the third ink were prepared as described in Examples 1 to 8.

### <Example 1>

In Example 1, the first ink (ink 1-1), the second ink (ink 2-1), and the third ink (ink 3-1) were prepared as shown in Table 1. Further, the evaluation results in Example 1 is shown in Table 2. Here, in the evaluation results, the pinning properties of the first ink and the second ink are described as Pinning 1-2, the pinning properties of the first ink and the third ink are described as Pinning 1-3, and the pinning properties of the first ink, the second ink, and the third ink are described as Pinning 1-2-3.

Here, "ACRYSET EF-009" manufactured by NIPPON SHOKUBAI CO., LTD. is used as a binder A. "SUPERFLEX 210" manufactured by DKS Co. Ltd. is used as a binder C. Further, "SILFACE SAG503A" that is a silicon surfactant manufactured by Nissin Chemical Co., Ltd. is used as a surfactant. Note that the percentage (excluding p/B (ratio)) of each component shown in the following Tables indicates mass%.

**(Table 1)**

| Component | Example 1 |
|---|---|
| First ink | Ink 1-1 |
| Pigment (dispersion A) | 0.0% |
| Binder A (acrylic) | 15% |
| Solvent A (propylene glycol) | 20% |
| Solvent B (Triethylene glycol monobutyl ether) | 5% |
| SILFACE SAG503A | 0.4% |
| Water | 59.6% |
| p/B | 0.00 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *ρ2 - ρ3* | 0.10 |

**(Table 2)**

| Evaluation items | Evaluation results of Example 1 |
|---|---|
| Pinning properties | OK |
| Pinning 1-2 | B |
| Pinning 1-3 | B |
| Pinning 1-2-3 | A |
| Adhesion | A |
| Rubfastness | A |
| Lamination suitability | B |

In Example 1, the pinning properties were OK, and the adhesion, rubfastness, and lamination suitability were good or particularly good.

In the following, description of common ink types will be omitted.

### <Example 2>

In Example 2, the first ink (ink 1-2), the second ink (ink 2-1), and the third ink (ink 3-1) were prepared as shown in Table 3. Further, the evaluation results in Example 2 are shown in Table 4.

Further, in Example 2, "Arrowbase SB1010" manufactured by UNITIKA LTD., which is a polyolefin resin, is used as a binder B in the first ink.

**(Table 3)**

| Component | Example 2 |
|---|---|
| First ink | Ink 1-2 |
| Pigment (dispersion A) | 0.0% |
| Binder B (polyolefin) | 15% |
| Solvent A (propylene glycol) | 20% |
| Solvent B (Triethylene glycol monobutyl ether) | 5% |
| SILFACE SAG503A | 0.4% |
| Water | 59.6% |
| p/B | 0.00 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *ρ* 2 *- ρ* 3 | 0.10 |

**(Table 4)**

| Evaluation items | Evaluation results of Example 2 |
|---|---|
| Pinning properties | OK |
| Pinning 1-2 | B |
| Pinning 1-3 | B |
| Pinning 1-2-3 | A |
| Adhesion | A |
| Rubfastness | A |
| Lamination suitability | B |

In Example 2, the pinning properties were OK, and the adhesion, rubfastness, and lamination suitability were good or particularly good. This is presumably because effects similar to those in Example 1 are exhibited even if the binder included in the ink 1-2, which functions as an adhesive layer containing no pigment, is replaced with a polyolefin resin.

### <Example 3>

In Example 3, the first ink (ink 1-3), the second ink (ink 2-1), and the third ink (ink 3-1) were prepared as shown in Table 5. Further, the evaluation results in Example 3 are shown in Table 6.

**(Table 5)**

| Component | Example 3 |
|---|---|
| First ink | Ink 1-3 |
| Pigment (dispersion A) | 5.0% |
| Binder A (acrylic) | 15% |
| Solvent A (propylene glycol) | 15% |
| Solvent B (Triethylene glycol monobutyl ether) | 4% |
| SILFACE SAG503A | 0.4% |
| Water | 60.9% |
| p/B | 0.33 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *ρ* 2 *- ρ* 3 | 0.10 |

**(Table 6)**

| Evaluation items | Evaluation results of Example 3 |
|---|---|
| Pinning properties | OK |
| Pinning 1-2 | A |
| Pinning 1-3 | A |
| Pinning 1-2-3 | A |
| Adhesion | A |
| Rubfastness | A |
| Lamination suitability | B |

In Example 3, the pinning properties were OK, and the adhesion, rubfastness, and lamination suitability were good or particularly good. This is presumably because a more favorable pinning effect can be achieved by applying the ink 1-3 that is a white ink using a pigment with high specific gravity to the recording medium.

### <Example 4>

In Example 4, the first ink (ink 1-4), the second ink (ink 2-2), and the third ink (ink 3-1) were prepared as shown in Table 7. Further, the evaluation results in Example 4 are shown in Table 8.

**(Table 7)**

| Component | Example 4 |
|---|---|
| First ink | Ink 1-4 |
| Pigment (dispersion A) | 10.0% |
| Binder A (acrylic) | 15% |
| Solvent A (propylene glycol) | 15% |
| Solvent B (Triethylene glycol monobutyl ether) | 6% |
| SILFACE SAG503A | 0.4% |
| Water | 54.1% |
| p/B | 0.67 |
| Surface tension | 22.5 |
| Second ink | Ink 2-2 |
| Pigment (dispersion A) | 13.0% |
| Binder C (urethane) | 10% |
| Solvent A | 10% |
| Solvent B | 3% |
| SILFACE SAG503A | 0.2% |
| Water | 63.8% |
| p/B | 130.0% |
| Density(25°C) | 1.14 |
| Surface tension | 24.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *p* 2 - *ρ* 3 | 0.10 |

**(Table 8)**

| Evaluation items | Evaluation results of Example 4 |
|---|---|
| Pinning properties | OK |
| Pinning 1-2 | B |
| Pinning 1-3 | B |
| Pinning 1-2-3 | A |
| Adhesion | A |
| Rubfastness | A |
| Lamination suitability | B |

In Example 4, the pinning properties were OK, and the adhesion, rubfastness, and lamination suitability were good or particularly good. This is presumably because sufficient pinning properties, adhesion, rubfastness, and lamination suitability are exhibited even if the difference in surface tension between the first ink and the second ink is 2.0 mN/m (upper limit value).

### <Example 5>

In Example 5, the first ink (ink 1-4), the second ink (ink 2-1), and the third ink (ink 3-2) were prepared as shown in Table 9. Further, the evaluation results in Example 5 are shown in Table 10.

**(Table 9)**

| Component | Example 5 |
|---|---|
| First ink | Ink 1-4 |
| Pigment (dispersion A) | 10.0% |
| Binder A (acrylic) | 15% |
| Solvent A (propylene glycol) | 15% |
| Solvent B (Triethylene glycol monobutyl ether) | 6% |
| SILFACE SAG503A | 0.4% |
| Water | 54.1% |
| p/B | 0.67 |
| Surface tension | 22.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-2 |
| Pigment (dispersion B) | 3% |
| Binder C (urethane) | 7% |
| Solvent A | 10% |
| Solvent B | 3% |
| SILFACE SAG503A | 0.3% |
| Water | 76.7% |
| Density(25°C) | 1.04 |
| Surface tension | 24.5 |
| *p* 2 *- p* 3 | 0.10 |

**(Table 10)**

| Evaluation items | Evaluation results of Example 5 |
|---|---|
| Pinning properties | OK |
| Pinning 1-2 | B |
| Pinning 1-3 | B |
| Pinning 1-2-3 | A |
| Adhesion | A |
| Rubfastness | A |
| Lamination suitability | B |

In Example 5, the pinning properties were OK, and the adhesion, rubfastness, and lamination suitability were good or particularly good. This is presumably because sufficient pinning properties, adhesion, rubfastness, and lamination suitability are exhibited even if the difference in surface tension between the first ink and the third ink is 2.0 mN/m (upper limit value).

### <Example 6>

In Example 6, the first ink (ink 1-5), the second ink (ink 2-1), and the third ink (ink 3-1) were prepared as shown in Table 11. Further, the evaluation results in Example 6 are shown in Table 12.

**(Table 11)**

| Component | Example 6 |
|---|---|
| First ink | Ink 1-5 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.3% |
| Water | 64.2% |
| p/B | 1.10 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *p* 2 - *p* 3 | 0.10 |

**(Table 12)**

| Evaluation items | Evaluation results of Example 6 |
|---|---|
| Pinning properties | OK |
| Pinning 1-2 | A |
| Pinning 1-3 | A |
| Pinning 1-2-3 | A |
| Adhesion | A |
| Rubfastness | A |
| Lamination suitability | B |

In Example 6, the pinning properties were OK, and the adhesion, rubfastness, and lamination suitability were good or particularly good. This is presumably because sufficient pinning properties, adhesion, rubfastness, and lamination suitability are exhibited even if the difference in surface tension between the first ink and the second ink is 0 mN/m (same value).

### <Example 7>

In Example 7, the first ink (ink 1-6), the second ink (ink 2-1), and the third ink (ink 3-2) were prepared as shown in Table 13. Further, the evaluation results in Example 7 are shown in Table 14.

**(Table 13)**

| Component | Example 7 |
|---|---|
| First ink | Ink 1-6 |
| Pigment (dispersion A) | 7.0% |
| Binder A (acrylic) | 6% |
| Solvent A (propylene glycol) | 20% |
| Solvent B (Triethylene glycol monobutyl ether) | 5% |
| SILFACE SAG503A | 0.3% |
| Water | 61.7% |
| p/B | 1.17 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *p 2 - ρ* 3 | 0.10 |

**(Table 14)**

| Evaluation items | Evaluation results of Example 7 |
|---|---|
| Pinning properties | OK |
| Pinning 1-2 | A |
| Pinning 1-3 | A |
| Pinning 1-2-3 | A |
| Adhesion | B |
| Rubfastness | A |
| Lamination suitability | B |

In Example 7, the pinning properties were OK, and the adhesion, rubfastness, and lamination suitability were good or particularly good. Further, since p/B was not 1.1 or less, the adhesion was evaluated to be good.

### <Example 8>

In Example 8, the first ink (ink 1-2), the second ink (ink 2-4), and the third ink (ink 3-1) were prepared as shown in Table 15. Further, the evaluation results in Example 8 are shown in Table 16.

**(Table 15)**

| Component | Example 8 |
|---|---|
| First ink | Ink 1-2 |
| Pigment (dispersion A) | 0.0% |
| Binder B (polyolefin) | 15% |
| Solvent A (propylene glycol) | 20% |
| Solvent B (Triethylene glycol monobutyl ether) | 5% |
| SILFACE SAG503A | 0.4% |
| Water | 59.6% |
| p/B | 0.00 |
| Surface tension | 23.5 |
| Second ink | Ink 2-4 |
| Pigment (dispersion A) | 10.0% |
| Binder C (urethane) | 5% |
| Solvent A | 20% |
| Solvent B | 5 % |
| SILFACE SAG503A | 0.4% |
| Water | 59.6% |
| p/B | 200.0% |
| Density(25°C) | 1.11 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *ρ* 2 - *ρ* 3 | 0.07 |

**(Table 16)**

| Evaluation items | Evaluation results of Example 8 |
|---|---|
| Pinning properties | OK |
| Pinning 1-2 | A |
| Pinning 1-3 | A |
| Pinning 1-2-3 | B |
| Adhesion | A |
| Rubfastness | B |
| Lamination suitability | B |

In Example 8, the pinning properties were OK, and the adhesion, rubfastness, and lamination suitability were good or particularly good. This is presumably because the density ρ2 of the second ink is 0.07 g/cm³ higher than the density ρ3 of the third ink, i.e., the relationship of ρ2 - ρ3 > 0.05 is established.

### <Comparative Example>

Comparative Examples of the present disclosure will be described below.

As shown in the following Tables 17 to 22, the first ink, the second ink, and the third ink were prepared as Comparative Examples 1 to 3.

### <Comparative Example 1>

In Comparative Example 1, the first ink (ink 1-7), the second ink (ink 2-1), and the third ink (ink 3-1) were prepared as shown in Table 17. Further, the evaluation results in Comparative Example 1 are shown in Table 18.

**(Table 17)**

| Component | Comparative Example 1 |
|---|---|
| First ink | Ink 1-7 |
| Pigment (dispersion A) | 7.0% |
| Binder C (urethane) | 6% |
| Solvent A (propylene glycol) | 20% |
| Solvent B (Triethylene glycol monobutyl ether) | 5% |
| SILFACE SAG503A | 0.4% |
| Water | 61.6% |
| p/B | 1.17 |
| Surface tension | 23.5 |
| Second ink | Ink 2-1 |
| Pigment (dispersion A) | 13.0% |
| Binder C (urethane) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-1 |
| Pigment (dispersion B) | 3% |
| Binder C (urethane) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *ρ 2 - ρ 3* | 0.10 |

**(Table 18)**

| Evaluation items | Evaluation results of Comparative Example 1 |
|---|---|
| Pinning properties | OK |
| Pinning 1-2 | A |
| Pinning 1-3 | A |
| Pinning 1-2-3 | A |
| Adhesion | C |
| Rubfastness | A |
| Lamination suitability | B |

In Comparative Example 1, the adhesion was evaluated to be poor. This is presumably because the binder included in the first ink is a urethane resin.

### <Comparative Example 2>

In Comparative Example 2, the first ink (ink 1-8), the second ink (ink 2-3), and the third ink (ink 3-3) were prepared as shown in Table 19. Further, the evaluation results in Comparative Example 2 are shown in Table 20.

**(Table 19)**

| Component | Comparative Example 2 |
|---|---|
| First ink | Ink 1-8 |
| Pigment (dispersion A) | 7.0% |
| Binder A (acrylic) | 6% |
| Solvent A (propylene glycol) | 20% |
| Solvent B (Triethylene glycol monobutyl ether) | 5% |
| SILFACE SAG503A | 0.4% |
| Water | 61.6% |
| p/B | 1.17 |
| Surface tension | 23.5 |
| Second ink | Ink 2-3 |
| Pigment (dispersion A) | 13.0% |
| Binder A (acrylic) | 10% |
| Solvent A | 15% |
| Solvent B | 3% |
| SILFACE SAG503A | 0.4% |
| Water | 58.6% |
| p/B | 130.0% |
| Density(25°C) | 1.14 |
| Surface tension | 23.5 |
| Third ink | Ink 3-3 |
| Pigment (dispersion B) | 3% |
| Binder A (acrylic) | 7% |
| Solvent A | 10% |
| Solvent B | 3% |
| SILFACE SAG503A | 0.4% |
| Water | 76.6% |
| Density(25°C) | 1.04 |
| Surface tension | 24 |
| *p* 2 *- p* 3 | 0.10 |

**(Table 20)**

| Evaluation items | Evaluation results of Comparative Example 2 |
|---|---|
| Pinning properties | OK |
| Pinning 1-2 | A |
| Pinning 1-3 | A |
| Pinning 1-2-3 | A |
| Adhesion | B |
| Rubfastness | A |
| Lamination suitability | C |

In Comparative Example 2, the rubfastness was evaluated to be poor. This is presumably because the binder included in the second ink and the third ink is not a urethane resin but an acrylic resin.

### <Comparative Example 3>

In Comparative Example 3, the first ink (ink 1-9), the second ink (ink 2-2), and the third ink (ink 3-2) were prepared as shown in Table 21. Further, the evaluation results in Comparative Example 3 are shown in Table 22.

**(Table 21)**

| Component | Comparative Example 3 |
|---|---|
| First ink | Ink 1-9 |
| Pigment (dispersion A) | 7.0% |
| Binder A (acrylic) | 6% |
| Solvent A (propylene glycol) | 20% |
| Solvent B (Triethylene glycol monobutyl ether) | 7% |
| SILFACE SAG503A | 0.4% |
| Water | 59.6% |
| p/B | 1.17 |
| Surface tension | 22.0 |
| Second ink | Ink 2-2 |
| Pigment (dispersion A) | 13.0% |
| Binder C (urethane) | 10% |
| Solvent A | 10% |
| Solvent B | 3% |
| SILFACE SAG503A | 0.2% |
| Water | 63.8% |
| p/B | 130.0% |
| Density(25°C) | 1.14 |
| Surface tension | 24.5 |
| Third ink | Ink 3-2 |
| Pigment (dispersion B) | 3% |
| Binder C (urethane) | 7% |
| Solvent A | 10% |
| Solvent B | 3% |
| SILFACE SAG503A | 0.3% |
| Water | 76.7% |
| Density(25°C) | 1.04 |
| Surface tension | 24.5 |
| *ρ* 2 - *ρ* 3 | 0.10 |

**(Table 22)**

| Evaluation items | Evaluation results of Comparative Example 3 |
|---|---|
| Pinning properties | NG |
| Pinning 1-2 | C |
| Pinning 1-3 | C |
| Pinning 1-2-3 | B |
| Adhesion | B |
| Rubfastness | A |
| Lamination suitability | C |

In Comparative Example 3, the pinning properties were NG. This is presumably because the difference between the surface tension of the first ink and the surface tension of the second ink, and the difference between the surface tension of the first ink and the surface tension of the third ink are 2.5 mN/m, which exceeds 2.0 mN/m (upper limit value).

## Claims

1. An ink set, comprising:
a first ink; and
a second ink; and
a third ink,
each of the first ink, the second ink, and the third ink including a binder, an organic solvent, water, and a surfactant,
the binder included in the first ink including at least one of an acrylic resin or a polyolefin resin,
the binder included in each of the second ink and the third ink including a urethane resin,
an absolute value of a difference between surface tension of the first ink and surface tension of the second ink being 2.0 mN/m or less, and
an absolute value of a difference between the surface tension of the first ink and surface tension of the third ink being 2.0 mN/m or less.

2. The ink set according to claim 1, wherein
the first ink is a white ink or a clear ink, and
the second ink is a white ink.

3. The ink set according to claim 1, wherein
the surfactant includes a silicon surfactant.

4. The ink set according to claim 1, wherein
a ratio of the pigment to the binder included in the first ink is 1.1 or less.

5. The ink set according to claim 1, wherein
density of the second ink is 0.05 g/cm³ or more higher than density of the third ink.

6. A recording apparatus (10) that uses the ink set according to claim 1, comprising:
an ejection unit (13) that ejects the first ink, the second ink, and the third ink onto a recording medium;
a drying unit (17) that dries the first ink, the second ink, and the third ink applied to the recording medium; and
a control unit (20) that performs control such that the ejection unit (13) ejects the first ink, the second ink, and the third ink onto the recording medium in this order, and that the drying unit (17) dries the recording medium onto which the first ink, the second ink, and the third ink has been ejected.

7. The recording apparatus (10) according to claim 6, wherein
the ejection unit (13) includes a first ejection unit (14) that ejects the first ink, a second ejection unit (15) that ejects the second ink, and a third ejection unit (16) that ejects the third ink, and
the drying unit (17) includes a first drying mechanism (18) that dries the first ink ejected by the first ejection unit (14).

8. The recording apparatus (10) according to claim 6, further comprising
a conveying unit (12) that includes a conveying plate for conveying the recording medium,
the drying unit (17) further including a preliminary heating unit (19) that heats the conveying plate in advance before the ejection unit (13) ejects the ink.
